Europäisches Patentamt

European Patent Office

Office européen des brevets

(19)

(11) Veröffentlichungsnummer : **0 070 354**
**B1**

(12) # EUROPÄISCHE PATENTSCHRIFT

(45) Veröffentlichungstag der Patentschrift :
18.06.86

(51) Int. Cl.⁴ : **A 01 B 63/111**

(21) Anmeldenummer : **82102669.7**

(22) Anmeldetag : **30.03.82**

(54) **Vorrichtung zur rückwirkungsfreien Mischwerteinstellung bei Hubwerken von Landmaschinen.**

(30) Priorität : **21.07.81 DE 3128713**

(43) Veröffentlichungstag der Anmeldung :
**26.01.83 Patentblatt 83/04**

(45) Bekanntmachung des Hinweises auf die Patenterteilung : **18.06.86 Patentblatt 86/25**

(84) Benannte Vertragsstaaten :
**AT DE FR GB IT**

(56) Entgegenhaltungen :
**DE-A- 3 017 554**
**DE-B- 2 216 748**
**FR-A- 1 374 855**
**FR-A- 2 171 967**
**LANDTECHNIK, Nr. 4, mitte April 1974, Lehrte-Hanno-ver, R. MÖLLER: "Pflugregelungssysteme - alte und neue Möglichkeiten", Seiten 151-157**
**Kupfmüller, Einführung in die theoretische Elektrotechnik**
**Steinbach/Rupprecht, Nachrichtentechnik**
**Baier, Elektronik - Lexikon**

(73) Patentinhaber : **ROBERT BOSCH GMBH**
**Postfach 50**
**D-7000 Stuttgart 1 (DE)**

(72) Erfinder : **Arnold, Winfried**
**Lärchenweg 50**
**D-7143 Vaihingen/Enz (DE)**

## Beschreibung

### Stand der Technik

Die Erfindung geht aus von einer Vorrichtung zur Regelung von Hubwerken von Landmaschinen nach der Gattung des Hauptanspruchs. Aus der Zeitschrift Landtechnik, Mitte April 1974, Seite 151 ff sind beispielsweise verschiedene Möglichkeiten der Regelung von an Hubwerken angebrachten Anbaugeräten beschrieben. Ein bekanntes Prinzip ist dabei die Mischregelung. Bei dieser Mischregelung wird mittels an Schleppern angebrachten Gebern nicht nur die Lage des angebauten Gerätes, sondern auch die Zugkraft erfaßt, die von dem angebauten Gerät auf den Schlepper abgegeben wird. Im Arbeitsbetrieb wird dann die Zugkraftregelung mit der Lageregelung kombiniert, Während die Lageregelung allein der Regelung der Gerätestellung relativ zum Schlepper dient, bewirkt die erwähnte Mischung, daß bei unterschiedlichen Böden die von der Zugkraftregelung herrührenden Tiefenabweichungen mit zunehmendem Anteil der beigemischten Lage verringert werden. Da die Istwerte von Kraft und Lage völlig unabhängig von einander ermittelt werden, jedoch mit einem gleichen Sollwert je nach Mischeinstellung korrespondieren sollen, ergibt sich zwangsläufig bei den bekannten Regeleinrichtungen beim Verstellen des Mischwerts eine ungewollte Hubwerksverstellung. Dies liegt daran, daß die Istwerte der verschiedenen Geber in keinerlei Bezug zueinander stehen. Der Führer eines Schleppers war daher gezwungen, bei einer Verstellung des Mischwertes den Sollwert der Lage ebenfalls neu einzustellen.

### Vorteile der Erfindung

Die erfindungsgemäße Vorrichtung mit den kennzeichnenden Merkmalen des Hauptanspruchs hat demgegenüber den Vorteil, daß der vom Kraftgeber abgegebene Signalwert beispielsweise auf den vom Lagegeber abgegebenen Signalwert nachgeführt und dadurch normiert wird. Dadurch ist eine feste Verknüpfung der beiden Istwerte gegeben. Dies hat zur Folge, daß das Mischverhältnis geändert werden kann, ohne daß sich dabei eine Lageveränderung ergibt. Normierung bedeutet dabei, daß das Verhältnis zwischen dem kraftabhängigen und dem lageabhängigen Signalwert zum Normierungszeipunkt = 1 wird. Diese Normierung kann mathematisch durch folgende Formeln ausgedrückt werden :

$$\text{Nicht normierter Signalwert (Kraft)} = S_K$$

$$\text{Normierter Signalwert (Kraft)} = S_{K_n}$$

$$\text{Signalwert (Lage)} = S_L$$

$$\text{Normierungsfaktor} = F_n$$

$$S_{K_n} = F_n \cdot S_K \text{ wobei } F_n = S_L/S_K$$

Durch die in den Unteransprüchen aufgeführten Maßnahmen sind vorteilhafte Weiterbildungen und Verbesserungen der im Hauptanspruch angegebenen Vorrichtung möglich. Vorteilhaft ist es, die Normierung des Kraftsignals dadurch durchzuführen, daß das Ausgangssignal des Kraftgebers einem Differenzverstärker zugeführt wird, an dessen weiterer Eingang der Ausgang eines Speichergliedes angeschlossen ist, in dem zu einer Vorgegebenen Zeit die Differenz zwischen Lagesignal und ursprünglich normierten Ausgangssignal des Kraftgebers gespeichert ist. Durch diese Maßnahme wird erreicht, daß das normierte Kraftsignal betragsmäßig den gleichen Wert wie das vorgegebene Lagesignal hat. Bei einer Veränderung des Mischstellers ergeben sich daher für den angeschlossenen Regler der Hubwerks keine Änderungen des Istwertes. Weiterhin ist es günstig, zur Ermittlung der Differenz zwischen Lagesignal und ursprünglich normierten Ausgangssignal einen PI-Regler vorzusehen, dessen Ausgangssignal in einem als Sample-and-Hold-Glied ausgebildeten Speicherglied speicherbar ist. Durch die Verwendung eines PI-Reglers wird erreicht, daß ständig auftretende Störungen vom Kraftsignal keinen Einfluß auf das Speicherglied nehmen. Vorteilhaft ist es, das Speichergleid bei einer Veränderung des Lagesollwertstellers zu aktivieren. Dadurch wird erreicht, daß bei einer Veränderung des Lageistwertes alsbald eine neuerliche Normierung des Kraftsignals erfolgt, so daß der Mischsteller potentialfrei ist.

Günstig ist es auch, die Einspeicherung zu erneuern, wenn das normierte Kraftsignal bei Bodenänderungen einen gewissen Grenzwert über- oder unterschreitet. Dadurch wird erreicht, daß bei stark unterschiedlichen Bodenverhältnissen bei starken Kraftänderungen die Normierung erneuert wird, bevor die Regeleinrichtung zur Regelung der Hubwerke den Regelbereich verläßt. Zur Erkennung des Überschreitens der Grenzwerte ist ein Fensterkomparator vorgesehen, dessen Fensterbereich in Abhängigkeit von der Stellung des Lagestellers veränderbar ist. Es ist günstig, eine Veränderung des Fensterbereiches in Abhängigkeit von der Stellung des Lagestellers vorzusehen, da auch die Normierung

2

in Abhängigkeit von der Lage erfolgt, so daß durch einen solchen Fensterkomparator die Grenzwerte je nach Normwert individuell anpaßbar sind. Weiterhin ist es günstig, ein Verzögerungsglied vorzusehen, das die Übertragung von kurzzeitigen Überschreitungen der Grenzwerte nicht weiterleitet. Kleinere Störungen haben dann keinen Einfluß auf die Normierung.

Vorteilhaft ist es, die Einspeicherung in das Speicherglied manuell vornehmen zu können. Dadurch ist dem Führer des Schleppers eine manuelle Eingriffsmöglichkeit in die Automatik gegeben. Weiterhin ist es günstig, die Einspeicherung in Abhängigkeit von der Verstellung des Mischstellers vorzunehmen. Diese Verstellung ist günstig, wenn die Mischvorrichtung selbst nicht rückwirkungsfrei arbeitet.

Vorteilhaft ist es auch, die Regelstruktur der Regelvorrichtung in Abhängigkeit von der Stellung des Mischstellers oder bei einer Veränderung des Lagestellers zu verändern. Je nach Kraft oder Lageanteil ist das Regelverhalten der Regelstrecke unterschiedlich. Durch die Umschaltung der Struktur der Regelstrecke ergibt sich der Vorteil, daß eine der Regelstrecke optimale Regeleinstellung möglich ist.

In weiterer Ausgestaltung der Erfindung ist es günstig, eine Prioritätsschaltung vorzusehen, die bei einer Betätigung des Lagestellers ein nur vom Lagegeber abhängiges Signal als Istwert für die Regelvorrichtung zuführt. Dadurch wird erreicht, daß bei einer Verstellung des Lagesollwertes der Lageistwert schnell erreicht wird, ohne daß auf äußere Krafteinflüsse Rücksicht genommen wird. Der Mischer wird während dieses Zeitraums überbrückt.

Es ist weiterhin günstig, die Priorität der Lagestellung nicht während einer konstanten Zeit aufrechtzuerhalten, sondern die Regelabweichung der Regelvorrichtung zu messen und beim Unterschreiten einer vorgegebenen Regelabweichung die Prioritätsschaltung wieder abzuschalten. Schließlich ist es vorteilhaft, einen Funktionsbildner vorzusehen, der nach einer Lageregelung die Wirkung des Mischtellers nicht plötzlich auftreten läßt, sondern in Abhängigkeit einer vorgegebenen Funktion von einer Lageregelung zur Mischregelung überleitet. Dadurch wird ein sanftes Übergangsverhältnis von Lageregelung zu Mischregelung erzielt.

Zeichnung

Zwei Ausführungsbeispiele der Erfindung sind in der Zeichnung dargestellt und in der nachfolgenden Beschreibung näher erläutert. Es zeigen Fig. 1 ein erstes Ausführungsbeispiel nach der Erfindung, Fig. 2 die Wirkungsweise der Mischregelung und Fig. 3 ein weiteres Ausführungsbeispiel nach der Erfindung.

Beschreibung der Ausführungsbeispiele

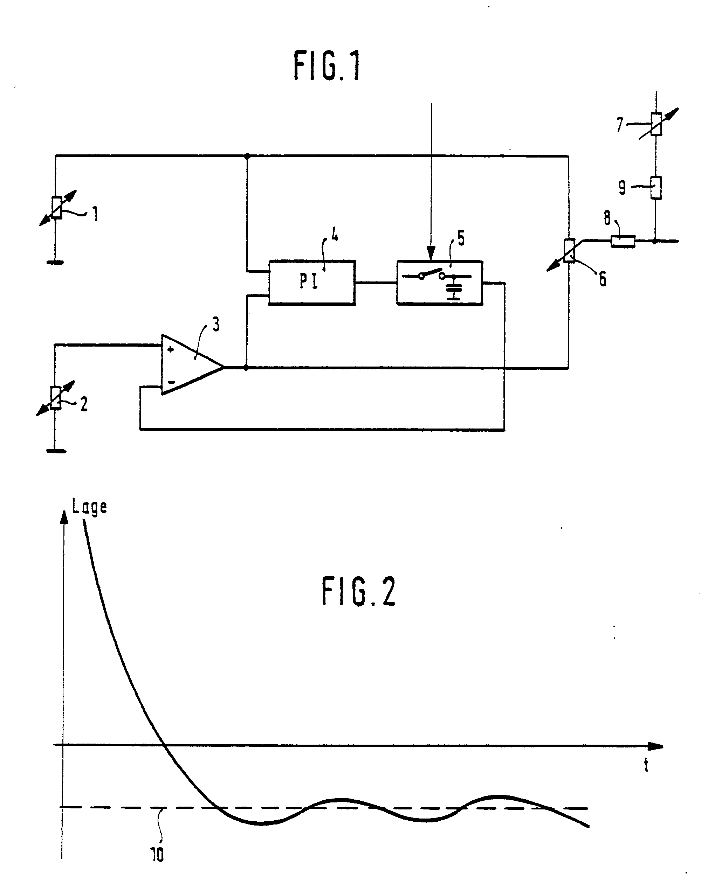

Die Fig. 1 zeigt ein Ausführungsbeispiel einer Vorrichtung zur Normierung des Kraftsignals nach der Erfindung. Mit 1 ist der Lagegeber am Hubwerk eines Schleppers gekennzeichnet, wobei an dem Hubwerk beispielsweise ein Pflug befestigt ist. Mit 2 ist ein Kraftgeber gekennzeichnet, der ebenfalls am Hubwerk des Schleppers befestigt ist und die Kraft anzeigt, die vom Pflug auf den Schlepper ausgeübt wird. Das Ausgangssignal des Kraftgebers 2 ist dem nichtinvertierenden Eingang eines Differenzverstärkers 3 zugeführt. Der Ausgang des Differenzverstärkers steht mit einem Eingang eines PI-Reglers 4 (PI-Regler = Proportional-Integral-Regler) in Verbindung. Weiterhin ist der Ausgang des Differenzverstärkers 3 mit der einen Seite eines als Potentiometer ausgebildeten Mischstellers 6 verbunden. Das Ausgangssignal des Lagegebers 1 ist einerseits mit dem weiteren Eingang des PI-Reglers 4 verbunden, und andererseits dem weiteren Eingang des Mischstellers 6 zugeführt. An den Ausgang des PI-Reglers 4 ist eine Sample-and-Hold-Schaltung 5 angeschlossen. Der Ausgang der Sample-and-Hold-Schaltung 5 angeschlossen. Der Ausgang der Sample-and-Hold-Schaltung 5 ist zum invertierenden Eingang des Differenzverstärkers 3 geführt. Die Sample-and-Hold-Schaltung hat einen Steuereingang, an dem durch ein anliegendes Signal die Speicherung bewirkbar ist. Der Mittenabgriff des als Potentiometer ausgebildeten Mischstellers 6 wird über einen Widerstand 8 zu einem nichtdargestellten Regler geführt. Desweiteren ist ein Lagesollwertsteller 7 vorgesehen, der über einen Widerstand 9 polaritätsrichtig ebenfalls mit der nicht dargestellten Regelschaltung verbunden ist. Durch den Ausgang der Regelschaltung ist beispielsweise ein Dreipunktregler ansteuerbar, durch den die Hubwerksventile bedienbar sind.

Mit dem Lagesollwertsteller 7 wird vom Führer des Schleppers die Lage des Anbaupfluges relativ zum Schlepper vorgegeben. Das angebaute Gerät wird nunmehr abgesenkt, bis das Signal des Lagegebers 1 dem vorgegebenen Sollwert entspricht. Um die unterschiedlichen Bodengegebenheiten bei der Regelung mit zu berücksichtigen, ist der Mischsteller 6 vorgesehen, mit dem dem Lagesignal ein der Kraft proportionales Signal zumischbar ist. Das der Kraft proportionale Signal, das die Kraft zwischen dem Schlepper und dem angebauten Gerät mißt, wird üblicherweise verschieden sein von dem Signal, das vom Lagegeber abgegeben wird. Würde unter diesen Umständen der Mischsteller 6 verstellt, um den relativen Einfluß zwischen Kraft- und Lagegeber zu verändern, so würde sich auch unter gleichen Verhältnissen von Kraft und Lage die an den Widerstand 8 abgegebene Spannung ändern, und somit den Regler veranlassen, die Lage des angebauten Gerätes zu verändern. Die durch die Verstellung des Mischtelers 6 bewirkte Lageveränderung müßte dann durch eine Veränderung des Lagesollwertstellers 7 ausgeglichen werden. Eine solche Veränderung würde dann nicht auftreten, wenn das Lagesignal vom Lagegeber 1 und das Kraftsignal vom Kraftgeber 2 zu einem ganz bestimmten Zeitpunkt gleich wären. An beiden Anschlußpunkten des Mischstellers 6 würde dann im ausgeglichenen Zustand die gleiche Spannung anliegen, so daß ein Verstellen des Potentiometers des Mischstellers 6 an dessen Ausgang keine Spannungsänderung hervorrufen würde. Eine Verstellung des Potentiometers 6 würde daher zuerst auf den angeschlossenen Regler keinen Einfluß ausüben. Prinzipiell istes dabei gleichgültig, ob das Lagesignal oder das Kraftsignal normiert wird. Die Fig. 1 zeigt die Normierung des Kraftsignals. Die am Ausgang des Verstärkers 3 anliegende Spannung wird in einem PI-Regler 4 mit der Spannung des Lagegebers 1 verglichen. Ein PI-Regler ist deswegen vorteilhaft, weil dadurch ein gewisses Grundrauschen des Kraftsignals ausgeglichen wird. Dieses Grundrauschen des Kraftsignals tritt im wesentlichen durch die grobe Beschaffenheit des Erdbodens und den Nickbewegungen des Schleppers auf. Das Ausgangssignal des PI-Reglers 4 wird nun zum vorgegebenen Zeitpunkt in ein Speicherglied 5 übernommen. Dies kann beispielsweise in festen Zeitabständen geschehen. Besser ist es jedoch, diese Speicherung automatisch vorzunehmen. Für einfache Fälle genügt jedoch auch eine äquidistante Abspeicherung. Der Speicherwert im Speicherglied 5 entspricht der Differenz zwischen dem Kraft- und dem Lagesignal. Wird dieser Wert dem invertierenden Eingang des Differenzverstärkers 3 zugeführt, so wird am Ausgang des Differenzverstärkers 3 ein Signal abgreifbar sein, dessen Wert exakt dem Lagesignal entspricht. Eine Betätigung des Mischstellers verursacht nunmehr keine Verschiebungen am Ausgang der Schaltungsanordnung.

In Fig. 2 ist der Regelvorgang als solcher dargestellt. Auf der Ordinate ist die Lage des angebauten Gerätes aufgetragen, während auf der Abszisse die Zeit aufgetragen ist. Mit dem Lagesollwertsteller 7 ist dabei eine Wunschtiefe 10 für den Pflug eingestellt. Der anfällige Absenkvorgang wird zu einem späteren Zeitpunkt näher erläutert. Ist nun der Mischsteller 6 so eingestellt, daß das Lagesignal des Lagegebers 1 dominiert, würde die eingestellte Wunschtiefe 10 ständig konstant gehalten werden. Würde sich der Boden von leicht auf schwer ändern, könnte dies bewirken, daß der Schlepper die benötigte Kraft nicht mehr aufbringen kann und sich festfährt. Wird nun ein Kraftanteil zugemischt, bedingt dies, daß auch eine Regelung in Abhängigkeit von der Kraft erfolgt. Bei einer Änderung der auftretenden Kraft am Kraftgeber 2 wird die Lage nicht mehr konstant gehalten, sondern je nach Stellung des Mischstellers 6 geändert. Die Pflugtiefe schwankt also um die Wunschtiefe 10. Da dem Kraftsignal nur ein Gleichspannungsanteil vom Speicherglied 5 zugemischt ist, werden die Signaländerungen des Kraftgebers 2 · um einen Gleichspannungswert versetzt auf den Mischsteller 6 übertragen. Durch die Veränderung des Mischstellers 6 in Richtung auf den Kraftgeber wird erreicht, daß die Laständerungen durch das angebaute Gerät für den Schlepper geringer werden, bis sie schließlich überhaupt nicht mehr vorhanden sind, wenn der Mischsteller so eingestellt ist, daß nur noch das normierte Signal des Kraftgebers 2 an den Widerstand 8 gelangt. In diesem Fall würde jedoch die Lage selbst keinen Einfluß mehr wahrnehmen können.

Bei der Anordnung nach Fig. 1 wird der Kraftkorrekturwert in einer Regelschleife mit dem Differenzverstärker 3, dem PI-Regler 4 und dem Speicherglied 5 gebildet, wobei das Lagesignal des Lagegebers 1 als Führungsgröße für das Kraftsignal dient. Durch diese Normierung wird erreicht, daß die Mischwerteinstellung rückwirkungsfrei geschieht und dadurch keine Korrektur mittels des Lagesollwertstellers 7 notwendig ist. Weiterhin ist zu beachten, daß die Kraftmeßeinrichtung mit dem Differenzverstärker 3 nur grob eingestellt werden muß, da selbsttätig eine elektronische Korrektur erfolgt. Dies vermindert die Wartungsarbeit, da Alterungs- und Temperaturprobleme der Meßwertregler nicht auftreten.

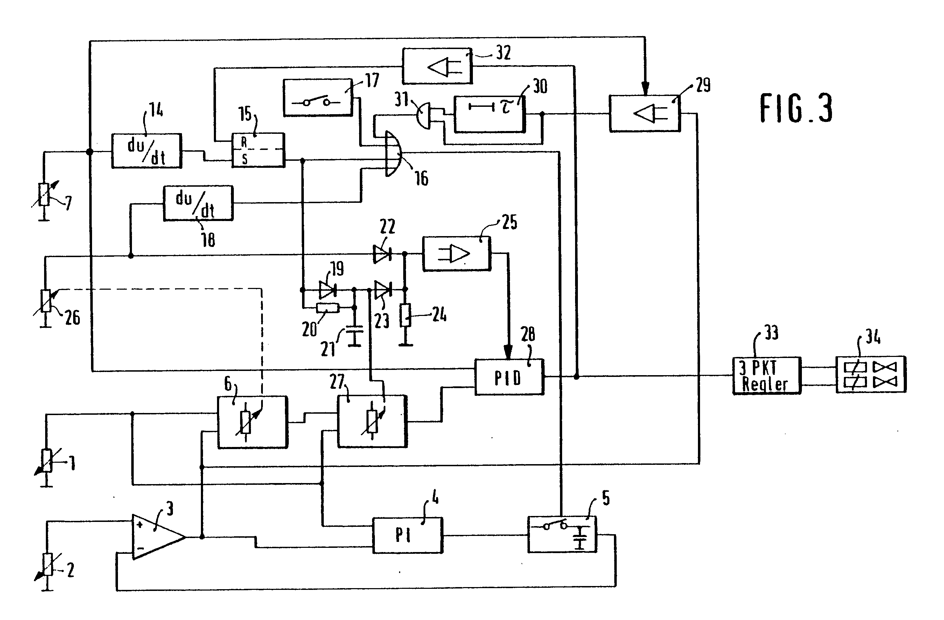

Die Fig. 3 zeigt eine ausführliche Schaltungsanordnung mit automatischer Normierung. Es ist wiederum der Kraftgeber 2 erkennbar, dessen Ausgang an den nichtinvertierenden Eingang des Differenzverstärkers 3 angeschlossen ist. Der Ausgang des Differenzverstärkers 3 steht wiederum mit einem Eingang des PI-Reglers 4 in Verbindung. Der weitere Eingang des PI-Reglers 4 ist mit dem Lagegeber 1 verbunden. Der Ausgang des PI-Reglers 4 führt zu einem Speicherglied 5, das wiederum als Sample-and-Hold-Schaltung ausgebildet ist. Der Ausgang des Speichergliedes 5 steht mit dem invertierenden Eingang des Differenzverstärkers 3 in Verbindung. Der Ausgang des Differenzverstärkers 3 einerseits und der Ausgang des Lagegebers 1 andererseits ist wiederum mit dem Mischsteller 6 verbunden. Der Mischsteller 6 ist desweiteren mechanisch mit einem weiteren Potentiometer 26 gekoppelt. Der Ausgang des Mischstellers 6 führt zum Eingang eines zweiten Mischers 27, dessen weiterer Eingang wiederum mit dem Lagegeber 1 verbunden ist. Der Mischer 27 ist beispielsweise ebenfalls als Potentiometer ausgebildet, dessen Abgriff elektronisch verstellbar ist. Der Ausgang des zweiten Mischers 27 führt zu einem Eingang eines PID-Reglers 28 (PID-Regler = Proportional-Integral-Differential-Regler), dessen Regelstruktur in Abhängigkeit von einer angelegten Spannung veränderbar ist. An den anderen Eingang des PID-Reglers 28 ist wiederum der Lagesollwertsteller 7 angeschlossen. Der Ausgang des PID-Reglers 28 steht mit einem Dreipunktregler 33 in Verbindung. Der Dreipunktregler 33 hat einen Totbereich, in dem von ihm kein Signal abgegeben wird, während beim Überschreiten dieses Totbereiches richtungsabhängig ein Signal abgegeben wird. Durch diese Signale wird die Hydraulik 34 gesteuert, die im einfachsten Fall aus zwei Hydraulikventilen besteht. Im Totbereich des Dreipunktreglers 33 sind beide Hydraulikventile geschlossen, während beim Überschreiten des Totbereichs des Dreipunktreglers 33 je nachdem das Hebenoder Senkenventil der Hydraulik 34 betätigt wird.

Das mit dem Mischsteller 6 gekoppelte Potentiometer 26 wirkt einerseits über einen Differenzierer 18 auf ein ODER-Glied 16 ein. Andererseits ist der Ausgang des Potentiometers 26 über eine Diode 22 mit einem Komparator 25 verbunden, dessen Ausgang die Regelstrukturumschaltung des PID-Reglers 28 bewirkt. Der Ausgang des Lagesollwertstellers 7 ist über ein Differenzierglied 14 mit dem Setzeingang eines Flipflops 15 verbunden. Der Ausgang des Flipflops 15 steuert einerseits einen weiteren Eingang des ODER-Gliedes 16 an, andererseits ist er mit der Parallelschaltung einer Diode 19 und eines Widerstands 20 verbunden. Die Parallelschaltung der Diode 19 und des Widerstands 20 ist über einen Kondensator 21 mit der gemeinsamen Masseleitung verbunden. Der Ausgang dieser Schaltungsanordnung steuert das Potentiometer des zweiten Mischers 27. Desweiteren führt dieser Ausgang zu einer Diode 23, die wie die Diode 22 mit dem Komparator 25 verbunden ist. Am Eingang des Komparators 25 ist noch ein Widerstand 24 gegen Masse geschaltet. Ein weiterer Eingang des ODER-Gliedes 16 ist mit einem manuellen Schalter 17 verbunden.

Der Ausgang des Differenzverstärkers 3 steht desweiteren mit einem steuerbaren Fensterkomparator 29 in Verbindung, wobei der Steuereingang des Fensterkomparators 29 durch eine Leitung mitdem Ausgang des Lagesollwertstellers verbunden ist. Der Ausgang des steuerbaren Fensterkomparators 29 ist einerseits mit einem Verzögerungsglied 30, andererseits mit einem Eingang eines UND-Gliedes 31 verbunden. Der Ausgang des Verzögerungsgliedes 30 steht mit dem anderen Eingang des UND-Gliedes 31 in Verbindung. Der Ausgang des UND-Gliedes 31 führt zu einem weiteren Eingang des ODER-Gliedes 16. Der Ausgang des ODER-Gliedes 16 führt zum Steuereingang des Sample-and-Hold-Gliedes 5. Der Ausgang des PID-Reglers 28 ist ebenfalls mit einem Fensterkomparator 32 verbunden, dessen Ausgang wiederum zum Rücksetzeingang des Flipflops 15 führt.

Die Normierung des vom Kraftgeber 2 abgegebenen Signals im Differenzverstärker 3 und seine Mischung ist bereits ausführlich erläutert, so daß auf diesen Bereich nicht mehr eingegangen wird. Die Speicherübernahme ist jedoch bei dieser Schaltungsanordnung automatisiert und wird durch einen Impuls vom ODER-Glied 16 bewirkt. Wird der Lagesollwertsteller 7 betätigt, so wird durch das Differenzierglied 14 erkannt, daß sich der Wert des Lagesollwertes, der auch dem PID-Regler 28 zugeführt ist, geändert hat. Dadurch wird das Flipflop 15 gesetzt. Das Speicherglied 5 kann den am Ausgang des PI-Reglers 4 anliegenden Wert übernehmen. Gleichzeitig mit dem Setzen des Flipflops 15 wird über die Diode 19 der Kondensator 21 aufgeladen. Die Dioden 23 und 22 bilden zusammen mit dem Widerstand 24 eine Höchstwertausweteschaltung. Nur der höchste Wert der an den Dioden 22 oder 23 anliegt, gelangt an den Eingang des Komparators 25. Ist das Flipflop 15 gesetzt, ist dies der Wert an der Diode 23. Dieser Wert dient auch zur Einstellung des Potentiometers des zweiten Mischers 27. Ist daher das Flipflop 15 gesetzt, so liegt ein sehr hoher Wert am Steuereingang des zweiten Mischers 27 an, was bedeutet, daß das Potentiometer des Mischers 27 so eingestellt ist, daß nur das Lagesignal vom Lagegeber 1 zum PID-Regler 28 gelangt. Durch die Höchstwertauswertung wird erreicht, daß dem Komparator 25 der Ausgangswert des Flipflops 15 angeboten ist. Durch den Ausgang des Komparators 25 wird nun die Regelstruktur des PID-Reglers 28 so eingestellt, daß er nur einen sehr schwachen I-Anteil (Integrations-Anteil) aufweist, d. h. im wesentlichen als PD-Regler (Proportional-Differential-Regler) wirkt. Durch diese Maßnahme wird automatisch erreicht, daß bei einer Veränderung des Lagesollwertes durch den Lagesollwertgeber 7 Krafteinflüsse keine Rolle spielen und das Anbaugerät durch die PD-Struktur des PID-Reglers 28 möglichst schnell die Wunschlage erreicht. Von seiner Ursprungslage wird daher das Anbaugerät sehr schnell zur Wunschlage 10 gefahren, wie dies im Anfangsbereich der Fig. 2 dargestellt ist. Ist die Regelabweichung am Ausgang des PID-Reglers 28 nahezu Null, wird dies durch den Fensterkomparator 32 erkannt, durch dessen Ausgang der Rücksetzeingang des Flipflops 15 betätigt wird. Durch den Rücksetzimpuls wird der Ausgang des Flipflops 15 umgeschaltet, das ODER-Glied 16 schaltet zurück und der zuletzt am Ausgang des PI-Reglers 4 anliegende Wert wird in den Speicher des Speichergliedes 5 übernommen. Durch das Rücksetzen des Flipflops 15 wird der Kondensator desweiteren über den Widerstand 20 langsam entladen. Durch diesen Entladungsvorgang wird das Potentiometer des zweiten Mischers 27 langsam verstellt, bis es schließlich bei entladenem Kondensator 21 so eingestellt ist, daß nur der Eingang vom Mischsteller 6 über das Potentiometer des zweiten Mischers 27 an den Eingang des PID-Reglers 28 gelangt. Durch dieses Übergangsverhalten wird bewirkt, daß nicht plötzlich von reiner Lageregelung auf eine Mischregelung umgeschaltet wird, sondern der Übergang fliessend nach einer Übergangsfunktion wahrgenommen wird. Diese Übergangsfunktion kann beliebig kompliziert ausgestaltet sein. Die Wahl einer e-Funktion führt jedoch zu einer besonders einfachen Schaltungsausgestaltung. Nach der Entladung des Kondensators 21 ist nunmehr der Wert des Mischstellers 6 direkt an den PID-Regler 28 durchgeschaltet. Nach einer vorgegebenen Zeit wird auch der an der Diode 22 anliegende Spannungswert den Spannungswert an der Diode 23 übersteigen. Der Komparator 25 schaltet nunmehr um, so daß die Regelstruktur des PID-Reglers 28 geändert ist. Die Spannung an der Diode 22 ist abhängig von dem Wert des Potentiometers 26, das gemeinsam mit dem Mischsteller 6 betätigt wird.

Der PID-Regler 28 weist dann besonders vorteilhafte Eigenschaften auf, wenn in Abhängigkeit von der Kraftzumischung sein I-Anteil vergrössert wird. Durch die Umschaltung des Komparators 25 wird bewirkt, daß der I-Anteil des PID-Reglers 28 erhöht wird, wenn ein vorgegebener Anteil des Kraftsignals durch den Mischsteller 6 auf den PID-Regler geführt wird. Der Grund dafür liegt ebenfalls in dem erhöhten Rauschanteil des Kraftsignals am Ausgang des Kraftgebers 3. Der Komparator 25 ist daher so eingestellt, daß er nicht umschaltet, wenn der Mischsteller 6 so eingestellt ist, daß weitgehend das Lagesignal des Lagegebers 1 dominiert. Bei komfortableren Regelvorrichtungen ist es auch möglich, den Komparator 25 durch einen Verstärker zu ersetzen, der die Regelstruktur des PID-Reglers 28 kontinuierlich verändert. Das Differenzierglied 18 gibt einen Impuls ab, wenn der Mischsollwert durch den Mischsteller 6 geändert wird. Auch dadurch wird eine neue Normierung des Kraftgebersignals erreicht. Eine Notwendigkeit dafür besteht jedoch nicht, so daß das Differenzierglied 18 bei Bedarf entfallen kann. Jedoch werden eventuell auftretende Temperaturdriften und Alterungserscheinungen hierdurch auf einfache Art und Weise kompensiert. Durch den Schalter 17 ist es dem Fahrer des Schleppers möglich, manuell eine Neunormierung zu veranlassen.

Je nach Stellung des Mischstellers ist es möglich, daß durch die auftretenden Kräfte die Lage des angebauten Gerätes so stark verändert wird, daß der PID-Regler 28 an die Grenzen seines Regelbereiches gelangt. In diesem Fall ist es günstig, eine Neunormierung vorzunehmen. Starke auftretende Kräfte werden hierbei durch den Fensterkomparator 29 erkannt. Da das Ausgangssignal des Differenzverstärkers 3 durch das Lagesignal normiert ist, ist es vorteilhaft, wenn auch die Grenzen des Fensterkomparators 29 der jeweiligen Normierung angepaßt werden. Dies geschieht dadurch, daß das Lagesollwertsignal ebenfalls dem Fensterkomparator 29 zugeführt ist, wobei die Grenzen des Fensterkomparators durch das Lagesollwertsignal festgelegt sind. Das Verzögerungsglied 30 und das UND-Glied 31 dient dazu, Kraftspitzen auszufiltern. Kurzzeitige Spitzen, die beispielsweise durch einen im Boden befindlichen Stein verursacht sein können, sollen nämlich nicht zu einer Neunormierung führen. Eine Neunormierung durch das Speicherglied 5 über das ODER-Glied 16 findet daher nur statt, wenn das Kraftsignal zumindest über die Verzögerungszeit des Verzögerungsgliedes 30 am Fensterkomparator 29 auftritt. Ist dies der Fall, wird eine Neunormierung vorgenommen.

Die Kraftregelbereiche können durch diese Maßnahmen je nach Bodenwiderstand sowie Fahrgeschwindigkeit und Schlupf beliebige Positionen innerhalb des Gesamtmeßbereiches einnehmen. Die erforderliche Regelbereichsbreite des PID-Reglers 28 hängt dabei jeweils vom entsprechenden Anbaugerät ab. Die Schaltungsanordnung nach Fig. 3 ermöglicht wiederum eine rückwirkungsfreie Mischwerteinstellung, so daß bei einer Veränderung des Mischstellers 6 eine Sollwertkorrektur durch den Lagesollwertgeber 7 nicht erforderlich ist. Desweiteren findet eine automatische Meßbereichsfindung des Kraftistwertes statt. Außerdem wird bei jedem Absenkvorgang die zuvor eingestellte Wunschtiefe trotz eventueller Bodenunterschiede gehalten, da bei diesem Absenkvorgang zuerst eine Lageregelung erfolgt, und danach der kraftarbeitspunkt durch die Normierung neu eingestellt wird. Da zuerst eine Lageregelung erfolgt, wird die Wunschtiefe schnell erreicht, und danach erst auf die Mischregelung umgeschaltet.

**Patentansprüche**

1. Vorrichtung zur Regelung von Hubwerken von Landmaschinen mit einem Kraftgeber (2) und einem Lagegeber (1), mit einem Lagesollwertsteller (7) und einem Mischsteller (6) und mit einer Regelvorrichtung (28, 33) zur Regelung der Lage des Hubwerks, dadurch gekennzeichnet, daß das vom Kraftgeber (2) bzw. vom Lagegeber (1) abgegebene Ausgangssignal zu einem vorgegebenen Zeitpunkt auf das Ausgangssignal des Lagegebers (1) bzw. Kraftgebers (2) normiert ist und daß beide Signale dem Mischsteller (6) zugeführt sind.

2. Vorrichtung nach Anspruch 1, dadurch gekennzeichnet, daß das Ausgangssignal des Kraftgebers (2) einem Differenzverstärker (3) zugeführt ist, an dessen weiteren Eingang der Ausgang eines Speichergliedes (5) angeschlossen ist, das zu einer vorgegebenen Zeit die Differenz zwischen Lagesignal und ursprünglich normiertem Ausgangssignal des Kraftgebers (2) speichert.

3. Vorrichtung nach einem der Ansprüche 1 oder 2, dadurch gekennzeichnet, daß zur Ermittlung der Differenz zwischen Lagesignal und ursprünglich normiertem Ausgangssignal ein PI-Regler (4) vorgesehen ist, dessen Ausgangssignal in einem als Sample-and-Hold-Glied ausgebildeten Speicherglied (5) speicherbar ist.

4. Vorrichtung nach einem der Ansprüche 1 bis 3, dadurch gekennzeichnet, daß die Einspeicherung in das Speicherglied (5) bei einer Veränderung des Lagesollwertstellers (7) erfolgt.

5. Vorrichtung nach einem der Ansprüche 1 bis 4, dadurch gekennzeichnet, daß die Einspeicherung in das Speicherglied (5) beim Überschreiten eines Grenzwertes des normierten Kraftsignales erfolgt.

6. Vorrichtung nach Anspruch 5, dadurch gekennzeichnet, daß zur Erkennung der Überschreitung der Grenzwerte ein Fensterkomparator (29) vorgesehen ist, dessen Fensterbereich in Abhängigkeit von der Stellung des Lagestellers (7) veränderbar ist.

7. Vorrichtung nach Anspruch 6 oder 7, dadurch gekennzeichnet, daß ein Verzögerungsglied (30, 31) vorgesehen ist, das kurzzeitige Überschreitungen der Grenzwerte nicht weiterleitet.

8. Vorrichtung nach einem der Ansprüche 1 bis 7, dadurch gekennzeichnet, daß die Einspeicherung in das Speicherglied (5) manuell erfolgt.

9. Vorrichtung nach einem der Ansprüche 1 bis 8, dadurch gekennzeichnet, daß die Einspeicherung in das Speicherglied (5) in Abhängigkeit von der Verstellung des Mischstellers (6) erfolgt.

10. Vorrichtung nach einem der Ansprüche 1 bis 9, dadurch gekennzeichnet, daß die Regelstruktur der Regelvorrichtung (28) in Abhängigkeit von der Stellung des Mischstellers (6, 26) und/oder bei einer Veränderung des Lagesollwertstellers (7) veränderbar ist.

# 0 070 354

11. Vorrichtung nach einem der Ansprüche 1 bis 10, dadurch gekennzeichnet, daß eine Prioritätsschaltung (19, 20, 21, 27) vorgesehen ist, die bei einer Betätigung des Lagesollwertstellers (7) ein nur vom Lagegeber abhängiges Signal als Istwert der Regelvorrichtung (28) zuführt.

12. Vorrichtung nach Anspruch 11, dadurch gekennzeichnet, daß die Prioritätsschaltung (19, 20, 21, 27) abgeschaltet ist, wenn die Regelabweichung der Regelvorrichtung (28) einen vorgegebenen Wert unterschreitet.

13. Vorrichtung nach Anspruch 11 oder 12, dadurch gekennzeichnet, daß ein Funktionsbildner (19, 20, 21) vorgesehen ist, der nach der Lageregelung die Wirkung des Mischstellers (6) erhöht.

## Claims

1. Device for controlling hoisting mechanisms of agricultural machines, comprising a force pickup (2) and a position pickup (1), a position set value adjuster (7) and a mixing adjuster (6) and a control device (28, 33) for controlling the position of the hoisting mechanism, characterised in that the output signal emitted by the force pickup (2) and by the position pickup (1) is normalised to the output signal of the position pickup (1) and of the force pickup (2), respectively, at a predetermined time and in that both signals are supplied to the mixing adjuster (6).

2. Device according to Claim 1, characterised in that the output signal of the force pickup (2) is supplied to a differential amplifier (3) to the other input of which the output of a storage element (5) is connected which stores the difference between the position signal and the originally normalised output signal of the force pickup (2) at a predetermined time.

3. Device according to one of Claims 1 or 2, characterised in that for determining the difference between the position signal and the originally normalised output signal, a PI controller (4) is provided the output signal of which can be stored in a storage element (5) which is constructed as a sample-and-hold element.

4. Device according to one of Claims 1 to 3, characterised in that the storing in the storage element (5) occurs with a change in the position set value adjuster (7).

5. Device according to one of Claims 1 to 4, characterised in that the storing in the storage element (5) occurs when a limit value of the normalised force signal is exceeded.

6. Device according to Claim 5, characterised in that for detecting the exceeding of the limit value, a window comparator (29) is provided the window range of which is adjustable as a function of the position of the position adjuster (7).

7. Device according to Claim 6 or 7, characterised in that a delay element (30, 31) is provided which does not pass on short-time transgressions of the limit values.

8. Device according to one of Claims 1 to 7, characterised in that the storing in the storage element (5) is carried out manually.

9. Device according to one of Claims 1 to 8, characterised in that the storing in the storage element (5) occurs as a function of the adjusting of the mixing adjuster (6).

10. Device according to one of Claims 1 to 9, characterised in that the controlling structure of the controlling device (28) can be changed as a function of the position of the mixing adjuster (6, 26) and/or with a change of the position set value adjuster (7).

11. Device according to one of Claims 1 to 10, characterised in that a priority circuit (19, 20, 21, 27) is provided which, when the position set value adjuster (7) is actuated, supplies a signal, which is only dependent on the position pickup, as an actual value to the controlling device (28).

12. Device according to Claim 11, characterised in that the priority circuit (19, 20, 21, 27) is switched off when the control error of the controlling device (28) drops below a predetermined value.

13. Device according to Claim 11 or 12, characterised in that a function generator (19, 20, 21) is provided which increases the effect of the mixing adjuster (6) in accordance with the position control action.

## Revendications

1. Dispositif pour la régulation des organes de relevage de machines agricoles, comportant un émetteur de force (2) et un émetteur de position (1), un afficheur de valeur de position prescrite (7) et un afficheur de mixage (6), ainsi qu'un dispositif de régulation (28, 33) pour la régulation de la position de l'organe de relevage, caractérisé en ce que le signal de sortie émis par l'émetteur de force (2) ou par l'émetteur de position (1) est normalisé, à un instant prescrit, sur le signal de sortie de l'émetteur de position (1) ou de l'émetteur de force (2) ; et en ce que les deux signaux sont amenés à l'afficheur de mixage (6).

2. Dispositif selon la revendication 1, caractérisé en ce que le signal de sortie de l'émetteur de force (2) est amené à un amplificateur différentiel (3) à l'autre entrée duquel est reliée la sortie d'un élément à mémoire (5) qui, à un instant prescrit, mémorise la différence entre signal de position et signal de sortie, normalisé à l'origine, de l'émetteur de force (2).

7

**0 070 354**

3. Dispositif selon l'une des revendications 1 ou 2, caractérisé en ce que pour déterminer la différence entre signal de position et signal de sortie normalisé à l'origine, il est prévu un régulateur PI (proportionnel-intégral) (4) dont le signal de sortie peut se mémoriser dans un élément à mémoire (5) conçu comme élément Sample-and-Hold (d'échantillonnage et de maintien).

4. Dispositif selon l'une des revendications 1 à 3, caractérisé en ce que la mise en mémoire dans l'élément à mémoire (5) se fait lors d'une modification de l'afficheur de la valeur de position prescrite (7).

5. Dispositif selon l'une des revendications 1 à 4, caractérisé en ce que la mise en mémoire dans l'élément à mémoire (5) se fait lors du dépassement, par valeur supérieure, d'une valeur limite du signal de force normalisé.

6. Dispositif selon la revendication 5, caractérisé en ce que pour reconnaître le dépassement, par valeur supérieure, des valeurs limites, il est prévu un comparateur à fenêtre (29) dont la fenêtre peut se modifier en fonction de l'indication de l'afficheur de position (7).

7. Dispositif selon la revendication 6 ou 7, caractérisé en ce qu'il est prévu un élément de temporisation (30, 31) qui ne transmet pas les dépassements de valeur limite de faible durée.

8. Dispositif selon l'une des revendications 1 à 7, caractérisé en ce que la mise en mémoire dans l'élément à mémoire (5) se fait manuellement.

9. Dispositif selon l'une des revendications 1 à 8, caractérisé en ce que la mise en mémoire dans l'élément à mémoire (5) se fait en fonction de l'intervention sur l'afficheur de mixage (6).

10. Dispositif selon l'une des revendications 1 à 9, caractérisé en ce que la structure du dispositif de régulation (28) peut se modifier en fonction de l'indication de l'afficheur de mixage (6, 26) et/ou lors d'une modification de l'affichage de valeur de position prescrite (7).

11. Dispositif selon l'une des revendications 1 à 10, caractérisé en ce qu'il est prévu un circuit de priorité (19, 20, 21, 27) qui, lorsque l'on agit sur l'afficheur de la valeur de position prescrite (7), amène comme valeur actuelle du dispositif de régulation (28) un signal qui ne dépend que de l'émetteur de position.

12. Dispositif selon la revendication 11, caractérisé en ce que le circuit de priorité (19, 20, 21, 27) est mis hors circuit si l'écart du dispositif de régulation (28) passe en dessous d'une valeur prescrite.

13. Dispositif selon la revendication 11 ou 12, caractérisé en ce qu'il est prévu un formateur de fonction (19, 20, 21) qui, après régulation de position, accroît l'action de l'afficheur de mixage (6).

8

# FIG.1

# FIG.2

FIG.3

0 070 354

du/dt  14

du/dt  18

R S  15

17

32

31  30

29

16

22

25

19

20  21  23  24

PID  28

6  27

1

3

2

P1  4

5

3 PKT Regler  33

34

7

26